# EUROPEAN PATENT APPLICATION

(11) **EP 3 147 576 A1**
(43) Date of publication of application: **29.03.2017**
(21) Application number: 15796700.1
(22) Date of filing: 15.05.2015
(51) Int. Cl.: F24D 13/02

(54) **DYNAMIC HEATING SYSTEM**

(30) Priority: 19.05.2014 ES 201430723
(71) Applicant: Exploded View, S.L., 28046 Madrid (ES)
(72) Inventor: MARTÍ FIBLA, Lluc, 43530 Alcanar (Tarragona) (ES); MARTIN SERRANO, Lara, 43530 Alcanar (Tarragona) (ES)
(74) Representative: Pons Ariño, Angel
(86) International application number: PCT/ES2015/070389
(87) International publication number: WO 2015/177390

(57) **Abstract**

The invention relates to a dynamic heating system in the form of a radiant surface, comprising a covering formed by tiles (1), each tile (1) containing at least one electrical heating resistance (2) and a thermal temperature-measuring sensor (3), a connection network (4) being arranged below the covering in the form of a grid, the tiles (1) being connected to the nodes of said grid electrically and via data transmission, while said connection network (4) is connected to a programmable controller (6) which establishes an individual electric power supply to each of the tiles (1) according to the temperature.

## Description

### FIELD OF THE INVENTION

The present invention relates to the thermal conditioning of premises, and proposes a dynamic heating system in the form of a radiant surface, which has a modular structuring the characteristics whereof make the system very advantageous to fulfil its function.

### PRIOR ART

There are various heating systems for the thermal conditioning of premises, such as electric or combustion furnaces, hot water radiators, air circulation, radiant floors, etc.

Said systems are selected for each application on the basis of factors such as the installation cost, the required heat output, the energy consumption, etc., and there are solutions that make it possible to control, whether manually or automatically, by means of thermostats, the turning on and off of the heating system or the passage of the heat flux, in order to maintain a given temperature at the application sites.

However, at the heating system application sites, there is usually a need to apply a different heat supply to the different spaces covered by the same heating system, which in present-day installations is generally solved by predetermining the installation as a function of a calculation based on the space volume of the different heating installation application premises; subsequently, during usage of the heating system, this solution is not dynamic, since the heat supply for each space is fixed on the basis of the specified pre-determination.

### OBJECT OF THE INVENTION

The invention proposes a heating system that has a dynamic character and a modular structuring, which provides for significant functional advantages as compared to conventional heating systems.

The heating system of the invention is composed of a covering, formed, for example, by floor tiles, the interior whereof incorporates at least one electrical resistance and one thermal sensor, and, below said covering, a network connection in the form of a grid; the grid nodes incorporate connectors with electrical connection terminals and data connection terminals, and this network connection is connected to a programmable controller connected to a power supply.

Thus, a modular assembly is obtained, since both the network connection and the covering are scalable, such that they may cover any application surface by coupling partial unitary sets of the network connection and placing consecutive tiles of the covering.

Moreover, the installation assembly is very simple, since it only requires placing the network connection on the basic floor structure where it is to be applied and, thereafter, placing the covering tiles over said network connection, the position of the tiles being determined by the structure of the network connection, by making a connection core of each tile coincide with the network connection node connectors.

On the other hand, the programmable controller, combined with an individual relationship with the heat production and temperature detection elements of each tile of the covering, allow for a dynamic operation programming, such that the heating elements of the different tiles are individually activated and deactivated on the basis of the programmed heat conditions and the existing temperature in the area of each tile, with the possibility of completely turning on or off the heating elements located in each tile or changing the energy supply, in order to increase or decrease the heat generation of said elements.

For all these reasons, the proposed heating system has very advantageous characteristics for the function that it is to fulfil, acquiring a life of its own and being preferable over conventional heating systems.

### DESCRIPTION OF THE FIGURES

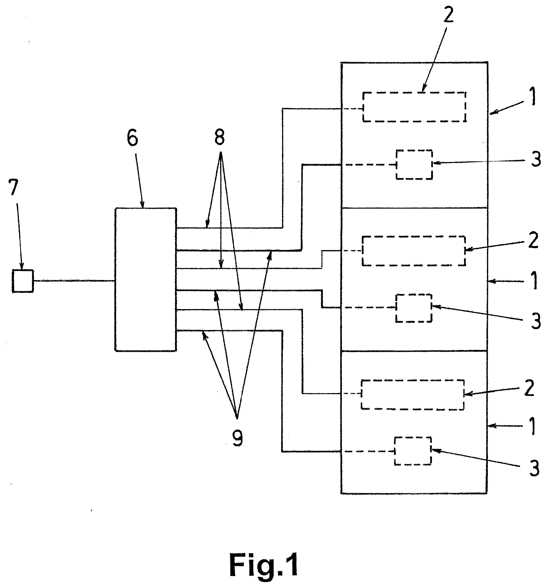

Figure 1 shows a block diagram of the functional set of the heating system of the invention.

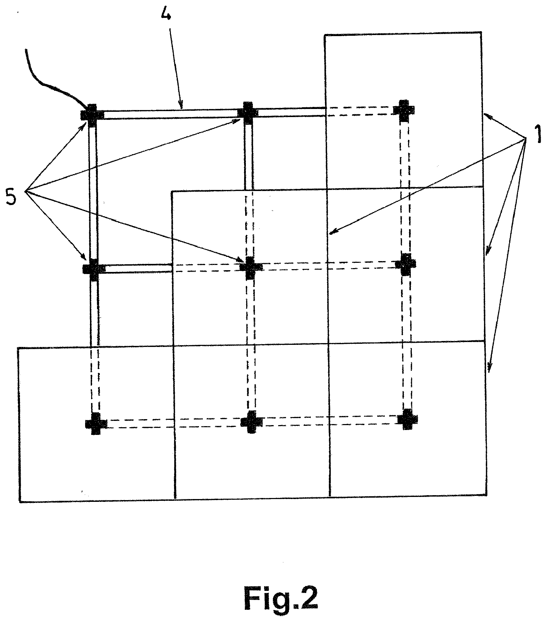

Figure 2 is a diagram of the arrangement of the tiles that form the covering over the network connection, according to the system of the invention.

### DETAILED DESCRIPTION OF THE INVENTION

The object of the invention relates to a heating system in the form of a modular radiant surface, with a dynamic functional embodiment that allows for the individual supply of the necessary heat to each surface point of the heating system application space.

The proposed heating system comprises a covering that is formed, for example, by floor tiles (1), the interior of each incorporating at least one electrical heat resistance (2) and one thermal temperature-measuring sensor (3).

Below the covering, there is a scalable network connection (4) defined by partial modular sets which are associated, in the form of a grid, with a distribution corresponding to the grid nodes at points that coincide with a connection point of each of the tiles (1) of the covering, according to the arrangement thereof in the application assembly. In order to facilitate the positioning of the tiles (1) in the application assembly, the connection point thereof with respect to the network connection (4) nodes is designed to be at the centre of each tile (1), although this location is not limiting, since the connection point may be located at any other area of the tiles (1).

Each network connection (4) node is equipped with a connector (5) that includes an electrical connection terminal and a data connection terminal; the tiles (1) of the covering are connected to these by means of respective connection terminals related to their electrical resistances (2) and their thermal sensors (3).

The network connection (4) is connected to a programmable controller (6), which is connected to a power supply outlet (7), said controller (6) being equipped with connection terminals designed to connect the electrical communication (8), in order to supply power to the electrical resistances (2) of the tiles (1) of the covering, and the connection data communication (9) with the thermal sensors (3) of said tiles (1) of the covering.

The electrical communication (8) and the data communication (9) between the controller (6) and the network connection (4) is established from one of the connectors (5) of the network connection (4) set nodes, said connector (5) acting as a master connector, whereas the rest of the connectors (5) behave as slaves thereof, and each of them discriminates the electrical and data communications corresponding to the respective tiles (1), whilst omitting those electrical and data communications corresponding to the other tiles (1) that make up the heating system covering.

Thus, by programming the controller (6), the operation of the heating installation may be controlled such that each space thereof maintains a given temperature; on the basis of the temperature data transmitted by the thermal sensors (3) of the different tiles (1) of the installation covering, the controller (6) automatically manages the individual activation or deactivation of the electrical resistances (2) of the different tiles (1) or a variation in the power supply of said electrical resistances (2), in order to maintain the desired temperature at each particular area of each tile (1).

Although the description has been made for a radiant floor application, the heating system according to the aforementioned characteristics of the invention is equally applicable to walls or ceilings, by replacing the floor tiles (1) with equivalent wall or ceiling plates, with the same assembly and installation characteristics as those described for floor applications.

## Claims

1. Dynamic heating system in the form of a radiant surface, **characterised in that** it comprises a covering formed by floor tiles (1) or similar elements, the interior of each incorporating at least one electrical heat resistance (2) and one thermal temperature-measuring sensor (3), and, below said covering element, a network connection (4) in the form of a grid, which incorporates, at each grid node, a connector (5) equipped with an electrical connection terminal and a data connection terminal, this network connection (4) being connected to a programmable controller (6) connected to a power supply outlet (7) by means of an electrical communication (8) and a data communication (9).

2. Dynamic heating system according to the first claim, wherein each tile (1) of the covering has a connection point equipped with an electrical connection terminal related to the electrical resistance (2) and a data connection terminal related to the thermal sensor (3), designed to be connected to a connector (5) of the network connection (4)

3. Dynamic heating system according to claims 1 and 2, wherein the connection point of each tile (1) coincides with the position of a network connection (4) grid core in the assembly arrangement of the covering of said network connection (4).

4. Dynamic heating system according to the first claim, wherein the electrical and the data connections of the network connection (4) with the controller (6) are established from a connector (5) of said network connection (4), which acts as the master connector, the rest of the connectors (5) of the network connection (4) being slaves to said master connector, and wherein each of them discriminates the electrical communications and the data communications that correspond to the tile (1) connected thereto.

5. Dynamic heating system according to the first claim, wherein the network connection (4) is assembled in a scalable manner by means of partial modular sets associated with one another.
